# EUROPEAN PATENT APPLICATION

(11) **EP 1 083 472 A1**
(43) Date of publication of application: **14.03.2001**
(21) Application number: 00202613.6
(22) Date of filing: 20.07.2000
(51) Int. Cl.: G05G 1/14

(54) **Adjustable pedal-parallel screw and rod**

(30) Priority: 24.08.1999 US 379778
(71) Applicant: Teleflex Incorporated, Plymouth Meeting, PA 19462 (US)
(72) Inventor: Rixon, Christopher, Tecumeseh,Ontario N8N 4J7 (CA); Bortolon, Christopher, Clawson, Michigan 48017 (US)
(74) Representative: Wharton, Peter Robert

(57) **Abstract**

Various adjustable pedal assemblies (**10**, **110** and **210**) are disclosed and each include a pedal support (**16**, **116** or **216**) slidably supported on a guide rod (**12**) with a pedal lever (**18**, **118** or **218**) mounted on the support (**16**, **116** or **216**). A screw (**22**) extends from a bracket (**14** or **214**) for driving the pedal support (**16**, **116** or **216**) along the guide rod (**12**). The adjustable pedal assemblies (**10**, **110** and **210**) are characterized by the screw (**22**) being external to and parallel to the guide rod (**12**). In the embodiment of Figures 1 and 2, the pedal lever (**18** or **118**) is pivotally attached to the support (**16**) or (**116**) whereas in the embodiment of Figure 3, the pedal lever (**218**) and the support (**216**) are defined by an integral member and the bracket (**214**) includes a connection (**34**) for rotatably supporting the bracket (**214**) on a vehicle.

## Description

### BACKGROUND OF THE INVENTION

### 1. Technical Field

The subject invention relates to an adjustable pedal assembly of the type attached to an automotive vehicle to control the brake, clutch and/or throttle in normal operation but which can be adjusted to a different position to accommodate a different driver position.

### 2. Description of the Prior Art

Foot operated pedals are provided for controlling the brakes, clutch, and engine throttle in automotive vehicles. Pedal assemblies have been recently developed wherein the position of pedal can be adjusted to accommodate different operators and/or driving positions. One group of such assemblies include a guide rod slidably supporting a pedal support with a pedal lever mounted on the support. A screw is included for driving the pedal support along the rod between various adjusted positions. However, the screw is disposed within the guide rod which complicates the drive connection between the pedal support and the screw. Variations of such assemblies are disclosed in U.S. Patent 3,643,525; 4,875,385; 4,989,474; 5,078,024; 5,460,061; 5,697,260; 5,722,302 and 5,819,593.

With the constant desire to reduce weight and cost, there remains the corresponding need for simplified combinations to reduce the number of components, the combined weight and the manufacturing operations.

### SUMMARY OF THE INVENTION AND ADVANTAGES

An adjustable pedal assembly comprising a guide rod, a pedal support slidably supported on the guide rod, a pedal pivotally mounted on the support, and a screw for driving said pedal support along the rod. The assembly is characterized by the screw being external to and parallel to the guide rod.

The combination of he subject invention reduces the number of components, the combined weight and the manufacturing operations. In a more specific sense, there is no need to bore out the center of the guide rod to insert the screw when the screw is located external to and parallel to the guide rod. This feature allows for a solid guide rod to be used, saving money and time in manufacturing the product.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of a first embodiment;
Figure 2 is a perspective view of a second embodiment; and
Figure 3 is a perspective view of a third embodiment.

### DETAILED DESCRIPTION OF THE PREFERRED EMBODIMENT

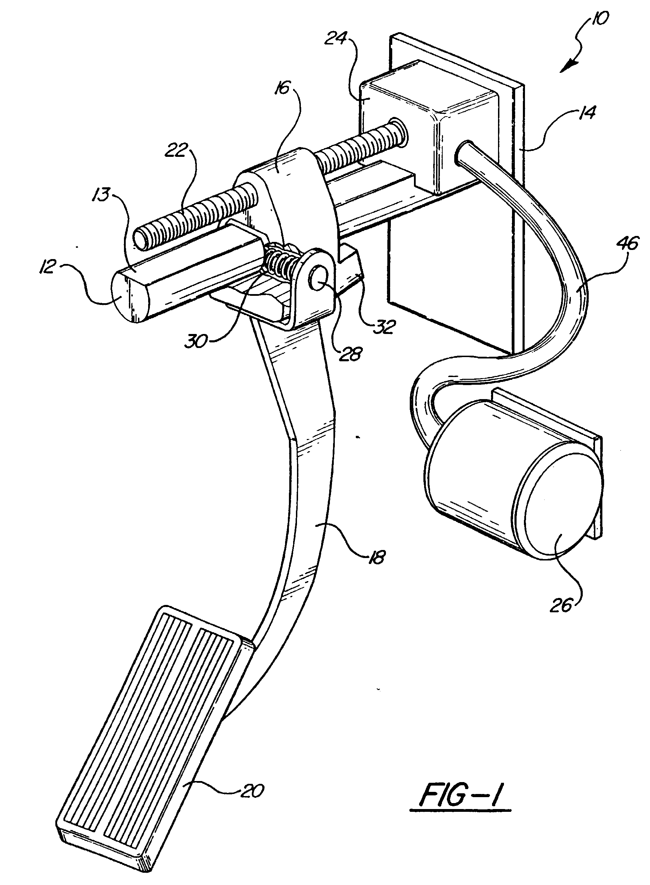

Referring to the Figures, wherein like numerals or numerals separated by one hundred, indicate like or corresponding parts throughout the several views, an embodiment of an adjustable pedal assembly constructed in accordance with the subject invention is generally shown at **10**, **110** and **210**, respectively, in Figures 1, 2 and 3, respectively.

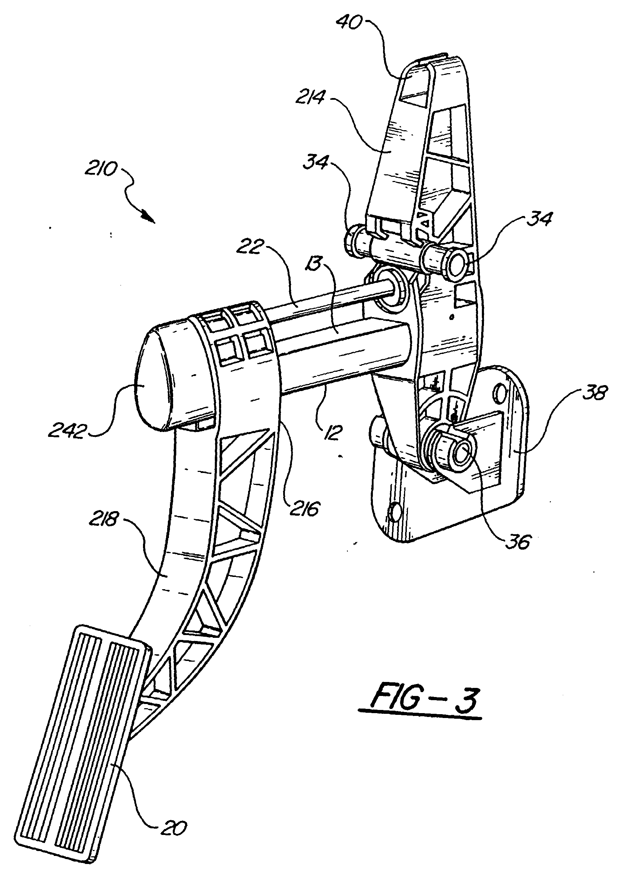

Each adjustable pedal assembly **10**, **110** and **210** includes a guide rod **12**. The guide rod **12** in the embodiment of Figures 1 and 3 is D-shaped as viewed in cross section to provide a key or flat surface **13**. A bracket **14** or **214** is adapted for attachment to the structure of a motor vehicle and the guide rod **12** is fixed to and extends from the bracket **14** or **214**.

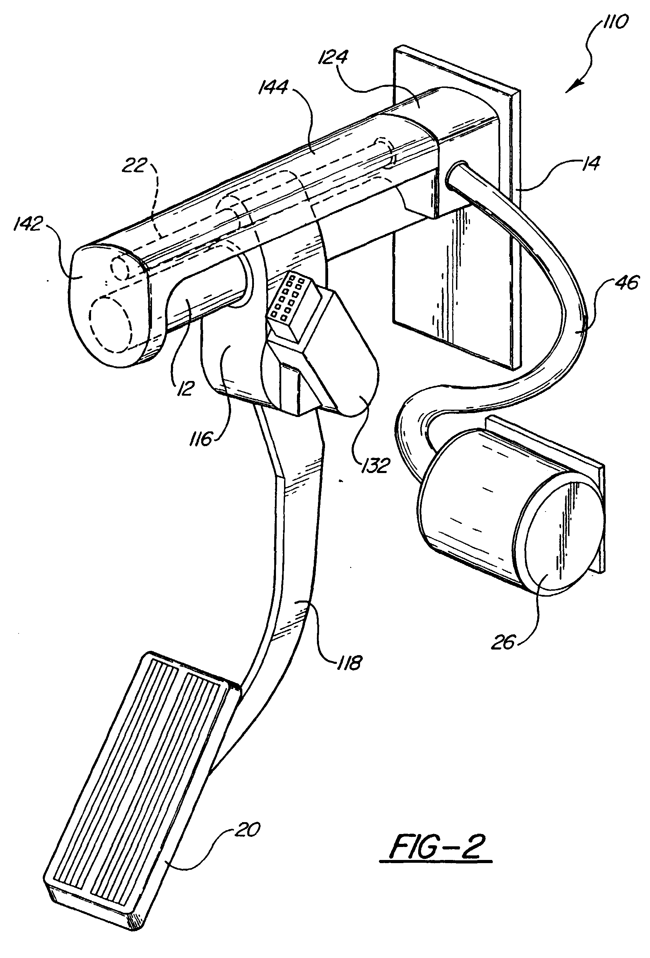

A pedal support **16**, **116** or **216** is slidably supported on the guide rod **12**. A pedal lever **18**, **118** or **218** is mounted on the support **16**, **116** or **216** and includes a pedal pad **20** at its lower distal end. A screw **22** extends from the bracket **14** or **214** for driving the pedal support **16**, **116** or **216** along the guide rod **12**. The screw **22** threadedly engages the support **16**, **116** or **216** whereby the support **16**, **116** or **216** moves along the guide rod **12** in response to rotation of the screw **22**. A drive mechanism **24**, **124** or **224** for rotating the screw **22** comprises a gear box which may be driven by an electric motor **26**. In the embodiment of Figures 1 and 2, the drive mechanism **24** or **124** is disposed on the guide rod **12** adjacent the bracket **14**, i.e., the drive mechanism **24** or **124** is secured to both the guide rod **12** and the bracket **14**. However, in the embodiment of Figure 3, the bracket **214** is defined by a housing and the drive mechanism **224** is disposed in the housing of the bracket **214**, (the motor not being shown in Figure 3).

The adjustable pedal assemblies **10**, **110** and **210** are characterized by the screw **22** being external to and parallel to the guide rod **12**. In the embodiment of Figures 1 and 2, the pedal lever **18** or **118** is pivotally attached to the support **16** or **116**. A pin such as that shown at **28** in Figure 1 secures the pedal levers **18** and **118** to the respective supports **16** and **116**. In addition, a torsion spring **30** surrounds the pin **28** to react with the pedal levers **18** and **118** to provide a resistance to pivotal movement thereof. It is important to use a pedal assembly which provides for a hysteresis effect to allow an operator advancing a pedal using foot pressure to have to use greater pressure for pedal advancement than that required to maintain a fixed position. This effect is important in maintaining the pedal in position while driving at a relatively constant speed and it must be considered in achieving a desired deceleration time. The hysteresis effect lessens the load to maintain a setting of the pedal, yet there is still enough force to cause reverse pedal action when a foot applied pressure is removed. The torsion spring **30** provides such a hysteresis effect.

In order to transmit a signal responsive to pivotal movements of the pedal levers **18** and **118**, an electrical signal generator **32** or **132** is supported by each of the pedal supports **16** and **116** for generating an electrical signal, which, in turn, controls the brake system or throttle.

On the other hand, the bracket **214** of the embodiment of Figure 3 includes a connection **34** for rotatably supporting the bracket **214** on a vehicle in response to pivotal movement of the pedal lever. A pin **36** rotatably supports the bracket **214** on the vehicle structure **38.** The pedal lever **218** and the support **216** are defined by an integral or one piece plastic member which threadedly engages the screw **22** and is in sliding engagement with the guide rod **12**. The integral one piece member extends downwardly from the guide rod **12** to a pedal pad **20** end. The top end of the integral one piece member includes an element connector **40** adapted for connection to an element to be controlled, such as a cable assembly leading to the brake system or throttle.

The screw **22** and the guide rod **12** extend from the brackets **14**, **114** and **214** to distal ends. These distal ends are cantilevered or unconnected in the embodiment of Figure 1 whereas a cap **142** or **242** interconnects the distal ends in the embodiments of Figures 2 and 3. In the case of Figure 2, the cap **142** is integral with a cover **144** which extends between the cap **142** and the drive mechanism **124** or bracket **14**. The caps **142** and **242** are secured to the distal ends of the screw **22** and the guide rod **12** to maintain stability and the parallel relationship between the screw **22** and the guide rod **12**.

The guide rod **12** extends rigidly rearward from the bracket **14** or **214** and is made of any standard metal. The guide rod **12** can attach either directly to the bracket **14**, **114** or **214** or to the drive mechanism **24**, **124** or **224** which is fixedly attached to the bracket **14**, **114** or **214**. The guide rod **12** could be slotted at either end to facilitate attachment to the bracket **14**, **114** or **214** or to the bearing caps **142** or **242**.

The pedal support **16**, **116** or **216** which may be formed as a casting, forging or stamping, and is designed to move slidably along the guide rod **12**. Preferably the one piece member defining the pedal lever **218** and the support **216** is molded of an organic polymeric material, which significantly reduces weight.

The drive mechanism **24**, **124** or **224** may be attached to a motor **26** which can be located at any position within the front of the car so long as a connection **46** can be made to the drive mechanism **24**, **124** or **224**. The motor can be any standard motor which can be activated by an electric signal generated by an operator.

The use of the potentiometer as a signal generator **32** or **132** is an effective manner of generating a signal and such is disclosed in U.S. Pat. No. 5,819,593 which is assigned of the present invention. The signal generator **32** or **132** responds to pedal lever **18**, **118** or **218** movement by generating a signal which is used by a corresponding device, such as the vehicle computer and/or the engine controller.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. An adjustable pedal assembly comprising;
a guide rod (**12**),
a pedal support (**16**, **116** or **216**) slidably supported on said guide rod (**12**),
a pedal lever mounted on said support (**16**, **116** or **216**),
a screw (**22**) for driving said pedal support (**16**, **116** or **216**) along said guide rod (**12**) and,
said adjustable pedal assembly (**10**, **110** and **210**) characterized by said screw (**22**) being external to and parallel to said guide rod (**12**).

2. An assembly as set forth in claim 1 including a bracket (**14** or **214**) for attachment to a motor vehicle, said guide rod (**12**) being fixed to and extending from said bracket (**14** or **214**).

3. An assembly as set forth in claim 2 wherein said pedal lever is pivotally attached to said support (**16** or **116**).

4. An assembly as set forth in claim 3 including a signal generator (**32** or **132**) supported by said pedal support (**16** or **116**) and responsive to movements of said pedal lever for generating an electrical signal.

5. An assembly as set forth in claim 2 wherein said bracket (**214**) includes a connection (**34**) for rotatably supporting said bracket (**214**) on a vehicle in response to pivotal movement of said pedal lever.

6. An assembly as set forth in claim 5 wherein said pedal lever and said support (**216**) are defined by an integral member threadedly engaging said screw (**22**) and in sliding engagement with said guide rod (**12**) and extending downwardly from said guide rod (**12**) to a pedal end.

7. An assembly as set forth in claim 2 including a drive mechanism (**24**, **124** or **224**) for rotating said screw (**22**).

8. An assembly as set forth in claim 7 wherein said drive mechanism (**24** or **124**) is disposed on said guide rod (**12**) adjacent said bracket (**14**).

9. An assembly as set forth in claim 7 wherein said bracket (**214**) is defined by a housing and said drive mechanism (**224**) is disposed in said housing of said bracket (**214**).

10. An assembly as set forth in claim 1 wherein said screw (**22**) and said guide rod (**12**) extend from said bracket (**14** or **214)** to distal ends, and including a cap (**142**) or (**242**) interconnecting said distal ends.
